# FASCICULE DE BREVET EUROPEEN

(11) **EP 3 553 576 B1**
(45) Date de publication et mention de la délivrance du brevet: **07.04.2021**
(21) Numéro de dépôt: 19168756.5
(22) Date de dépôt: 11.04.2019
(51) Int. Cl.: G02B 6/36, G02B 6/44, G02B 6/06

(54) **FAISCEAU DE FIBRES OPTIQUES LIÉES ENTRE ELLES AVEC DE L'ADHÉSIF, PROCÉDÉ ET DISPOSITIF D'OBTENTION D'UN TEL FAISCEAU**
BÜNDEL AUS OPTISCHEN FASERN, DIE DURCH KLEBER MITEINANDER VERBUNDEN SIND, VERFAHREN UND VORRICHTUNG ZUR HERSTELLUNG EINES SOLCHEN BÜNDELS
BUNDLE OF OPTICAL FIBRES CONNECTED TOGETHER WITH ADHESIVE, METHOD AND DEVICE FOR OBTAINING SUCH A BUNDLE

(30) Priorité: 12.04.2018 FR 1853213
(43) Date de publication de la demande: 16.10.2019
(73) Titulaire: ACOME, 75014 Paris (FR)
(72) Inventeur: LAGREVE, Christian, 61100 La Chapelle Biche (FR); PLET, Frédéric, 35120 Dol de Bretagne (FR); CANEPA, Christophe, 35133 Javené (FR)
(74) Mandataire: Regimbeau

(56) Documents cités:
- EP-A1- 3 168 665
- JP-A- H10 160 987
- JP-A- 2017 173 517

## Description

### DOMAINE DE L'INVENTION

La présente invention concerne un faisceau de fibres optiques, un procédé d'application d'adhésif sur un faisceau de fibres optiques, et un dispositif pour appliquer de l'adhésif sur un faisceau de fibres optiques.

### ETAT DE LA TECHNIQUE

Un câble optique contient conventionnellement plusieurs fibres optiques. Ces fibres optiques sont regroupées en un ou plusieurs faisceaux dans de tels câbles.

Plusieurs formes de faisceaux de fibres optiques ont été proposées.

Il a notamment été proposé des faisceaux de fibres optiques en forme de ruban. Le ruban comprend une pluralité de fibres optiques parallèles dont les axes respectifs sont coplanaires, les fibres optiques étant noyées dans une matrice ayant pour fonction de maintenir les fibres dans cette disposition coplanaire. Un inconvénient d'un tel ruban est qu'il est difficile d'isoler une fibre optique des autres fibres optiques en vue de manipulations spécifiques sur cette fibre optique.

Pour surmonter ce problème, il a été proposé d'entourer une pluralité de fibres optiques par une pellicule thermoplastique rigide ou semi-rigide facilement déchirable. Les fibres optiques ne sont pas fixées entre elles, mais la pellicule limite leurs déplacements. Cependant, cette liberté de mouvement relative des fibres optiques dans l'espace interne défini par la pellicule thermoplastique a pour conséquence de rendre plus malaisée une connexion simultanée de plusieurs des fibres optiques à un ou plusieurs autres équipement(s) optique(s).

Pour résoudre simultanément les problèmes se posant dans les deux types de faisceaux qui précèdent (en ruban et à base de pellicule thermoplastique), il a été proposé un faisceau formé à partir d'un ruban dit en toile d'araignée (« Spider web ribbon » en anglais), également connu sous le nom de ruban enroulable (« rollable ribbon » en anglais »). Le document EP3168665 décrit un faisceau de ce type, lequel est obtenu au moyen d'un procédé comprenant les étapes suivantes.

Des fibres optiques sont disposées parallèlement à un axe de façon à former un ruban sensiblement plan. Le ruban comprend au moins une fibre optique entourée par deux autres fibres qui lui sont adjacentes, et deux fibres optiques extrémales opposées, chaque fibre optique extrémale n'ayant qu'une seule autre fibre qui lui est adjacente. Le ruban comprend par ailleurs des éléments de connexion à distance les uns des autres dans une direction parallèle à l'axe du ruban. Chaque élément de connexion lie mutuellement deux fibres optiques adjacentes du ruban. Toutefois, aucun élément de connexion ne lie mutuellement les deux fibres optiques extrémales. Autrement dit, un ruban à N fibres optiques comprend N-1 éléments de connexion.

Le ruban est enroulé sur lui-même de façon à former un fagot, plus compact qu'un ruban. Dans ce fagot, chaque fibre optique est adjacente à au moins deux autres fibre optiques.

Dans une étape dite de guirlandage postérieure à l'étape d'enroulement, deux guirlandes sont disposées le long de et autour du fagot de fibres optique. Chaque guirlande s'étend de manière continue le long du fagot. Les deux guirlandes sont liées l'une à l'autre de manière intermittente en différents points ayant des positions respectives différentes dans une direction parallèle à l'axe du ruban enroulé. Ces guirlandes maintiennent ainsi le ruban dans sa position enroulée, autrement dit dans sa forme de fagot compact.

Toutefois, ces guirlandes impliquent une quantité de matière additionnelle substantielle pour que le faisceau de fibres conserve cette forme compacte.

### EXPOSE DE L'INVENTION

Un but de l'invention est de maintenir un faisceau de fibres optiques sous une forme compacte au moyen d'une quantité de matière additionnelle réduite.

Il est ainsi proposé, selon un premier aspect de l'invention, un faisceau de fibres optiques comprenant :
- un nombre N de fibres optiques agencées de manière non coplanaire pour former ensemble un fagot s'étendant le long d'un axe, dans lequel N ≥3,
- le même nombre N de points d'adhésif appliqués à distance les uns des autres sur les fibres optiques en des positions respectives différentes dans une direction parallèle à l'axe, dans lequel chaque point d'adhésif touche un ensemble de fibres optiques du fagot comprenant deux fibres optiques mutuellement adjacentes de sorte que le point d'adhésif fixe les fibres optiques de l'ensemble les unes par rapport aux autres, dans lequel les N ensembles respectivement touchés par les N points d'adhésifs sont différents les uns des autres, et dans lequel chaque fibre optique est touchée par au moins un des N points d'adhésifs.

Comme chacune des N fibres optiques du faisceau selon le premier aspect de l'invention est touchée par un point d'adhésif qui la relie à une autre fibre optique du faisceau, les N fibres optiques du faisceau sont toutes reliées entre elles par de l'adhésif, permettant ainsi au faisceau de conserver sa forme de fagot, plus compacte qu'un ruban.

La quantité de matière additionnelle requise pour maintenir cette forme de fagot est réduite car seulement N points d'adhésifs à distance les uns des autres sont appliqués sur un tronçon donné du faisceau, sans qu'il soit nécessaire de réaliser une étape de guirlandage. Ces N points d'adhésifs à distance les uns des autres requièrent moins de matière qu'une seule guirlande qui s'étendrait continument le long de l'axe du faisceau.

En outre, grâce au fait que les N points d'adhésif ont des positions respectives différentes dans la direction de l'axe du faisceau, les fibres optiques du faisceau sont maintenues les unes aux autres de manière étroite sur un tronçon du faisceau de longueur plus importante que si certains de ces points partageaient la même position dans cette même direction de l'axe du faisceau.

Le faisceau selon le premier aspect de l'invention peut en outre comprendre les caractéristiques suivantes, prises seules ou en combinaison lorsque cela est techniquement possible :
- au moins un des points d'adhésif s'étend à 360 degrés autour d'une des fibres optiques du fagot.
- au moins un des ensembles comprend trois à sept fibres optiques du fagot.
- deux points d'adhésifs ayant des positions consécutives dans la direction parallèle à l'axe sont séparés par une distance mesurée suivante cette direction qui est comprise dans une plage allant de 0,1 millimètres à 20 centimètres.

Il est également proposé, selon un deuxième aspect de l'invention, un procédé d'application d'adhésif sur un faisceau de fibres optiques comprenant un nombre N de fibres optiques agencées de manière non coplanaire pour former ensemble un fagot s'étendant le long d'un de l'axe, dans lequel N ≥ 3, le procédé comprenant l'application du même nombre N de points d'adhésif à distance les uns des autres sur les fibres optiques en des positions respectives différentes dans une direction parallèle à l'axe, dans lequel chaque point d'adhésif touche un ensemble de fibres optiques du fagot comprenant deux fibres optiques mutuellement adjacentes de sorte que le point d'adhésif fixe les fibres optiques de l'ensemble les unes par rapport aux autres, dans lequel les N ensembles respectivement touchés par les N points d'adhésifs sont différents les uns des autres, et dans lequel chaque fibre optique est touchée par au moins un des N points d'adhésifs.

Le procédé selon le deuxième aspect de l'invention peut en outre comprendre les caractéristiques suivantes, prises seules ou en combinaison lorsque cela est techniquement possible.

L'application d'un point d'adhésif peut comprendre des étapes de :
- dépôt du point d'adhésif sur une première fibre optique propre du fagot alors que la première fibre optique est à distance des autres fibres optiques du fagot,
- rapprochement mutuel de la première fibre optique et d'au moins une deuxième fibre optique du fagot jusqu'à ce que le point d'adhésif touche la deuxième fibre optique.

Le point d'adhésif peut être déposé de sorte à s'étendre à 360 degrés autour de la première fibre optique.

Le procédé peut comprendre des étapes de
- insertion des N fibres optiques dans le même nombre N de passages respectifs d'un tambour, le tambour définissant par ailleurs le même nombre N de canaux d'injection de liquide adhésif débouchant à l'extérieur du tambour et débouchant respectivement dans les N passages,
- positionnement d'un élément de distribution de liquide adhésif définissant un canal de distribution dans N positions différentes dans chacune desquelles un seul des canaux d'injection est connecté au canal de distribution, les N canaux d'injection étant connectés l'une après l'autre avec le canal de distribution par déplacement de l'élément de distribution par rapport au tambour,
- envoi d'un liquide adhésif dans le canal de distribution, de sorte que le liquide adhésif traverse successivement les canaux d'injection et se dépose successivement sur les N fibres optiques insérées dans les N passages de manière à former les N points d'adhésifs.

Les N fibres optiques peuvent être avancées simultanément dans les N passages, par exemple pendant que l'élément de distribution est déplacé par rapport au tambour.

Il est également proposé, selon un troisième aspect de l'invention, un dispositif d'obtention d'un faisceau de fibres optiques, le dispositif comprenant :
- un tambour définissant un nombre N de passages destinés à être traversés respectivement par le même nombre N de fibres optiques, et définissant par ailleurs le même nombre N de canaux d'injection de liquide adhésif débouchant à l'extérieur du tambour et débouchant respectivement dans les N passages, dans lequel N ≥3,
- un élément de distribution définissant un canal de distribution de liquide adhésif, l'élément de distribution étant mobile par rapport au tambour dans N positions différentes dans chacune desquelles un seul des canaux d'injection est connecté au canal de distribution, les N canaux d'injection étant agencés pour être connectés les uns après les autres avec le canal de distribution par déplacement de l'élément de distribution par rapport au tambour dans les N positions, de sorte que le même nombre N de points d'adhésifs à distance les uns des autres puissent être successivement appliqués sur les N fibres optiques insérées dans les passages par envoi de liquide adhésif dans le canal de distribution) puis dans les canaux d'injection les uns après les autres,
- une filière agencée en aval du tambour pour rapprocher les N fibres optiques les unes vers les autres après leur traversée des N passages, de sorte que les N fibres optiques soient non coplanaires et forment ensemble un fagot s'étendant le long d'un axe dans lequel les N points d'adhésifs ont des positions respectives différentes dans une direction parallèle à l'axe, et dans lequel chaque point d'adhésif touche un ensemble de fibres optiques du fagot comprenant deux fibres optiques mutuellement adjacentes de sorte que le point d'adhésif fixe les fibres optiques de l'ensemble les unes par rapport aux autres, dans lequel les N ensembles du fagot respectivement touchés par les N points d'adhésifs sont différents les uns des autres, et dans lequel chaque fibre optique est touchée par au moins un des N points d'adhésifs.

Le dispositif selon le troisième aspect de l'invention peut en outre comprendre les caractéristiques suivantes, prises seules ou en combinaison lorsque cela est techniquement possible.
- l'élément de distribution est monté à rotation sur le tambour,
- au moins une buse d'injection agencée dans un des N passages du tambour, la buse d'injection étant adaptée pour déposer un liquide adhésif provenant d'un des canaux d'injection à 360 degrés autour d'une fibre optique insérée dans le passage où la buse d'injection est agencée,
- des moyens d'avancement pour faire avancer simultanément les fibres optiques du faisceau dans les passages du tambour,
- des moyens de déplacement de l'élément de distribution par rapport au tambour, et une unité de commande configurée pour piloter les moyens de déplacement et d'avancement de sorte que l'élément de distribution soit positionné les N positions l'une après l'autre pendant que les fibres optiques du faisceau sont avancées dans les passages du tambour,
- un élément d'alimentation fixe par rapport au tambour, l'élément d'alimentation définissant un canal d'alimentation en liquide adhésif agencé pour être connecté au canal de distribution en liquide adhésif quelle que soit la position de l'élément de distribution par rapport au tambour,
- l'un des éléments de distribution et d'alimentation présente une surface définissant une gorge s'étendant autour de l'axe du tambour, et dans lequel le canal de l'autre élément parmi les éléments de distribution et d'alimentation débouche dans la gorge.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 est une vue en perspective de côté d'un faisceau de fibres optiques selon un mode de réalisation de l'invention.
- La figure 2 est un ensemble de sept vues en coupe montrant différentes sections du faisceau de fibres optiques de la figure 1.
- La figure 3 est une vue en perspective de certains éléments d'un dispositif permettant d'obtenir un faisceau de fibres, selon un mode de réalisation de l'invention.
- La figure 4 illustre façon schématique d'autres éléments du dispositif de la figure 3.
- La figure 5 est une vue en coupe longitudinale des éléments de la figure 3 ainsi que d'autres éléments du même dispositif.
- Les figures 6 à 8 sont des vues en coupe longitudinale similaires à la figure 5, montrant également des fibres optiques à différentes étapes d'un procédé d'obtention d'un faisceau de fibres optiques.

Sur l'ensemble des figures, les éléments similaires portent des références identiques.

### DESCRIPTION DETAILLEE DE MODES DE REALISATION DE L'INVENTION

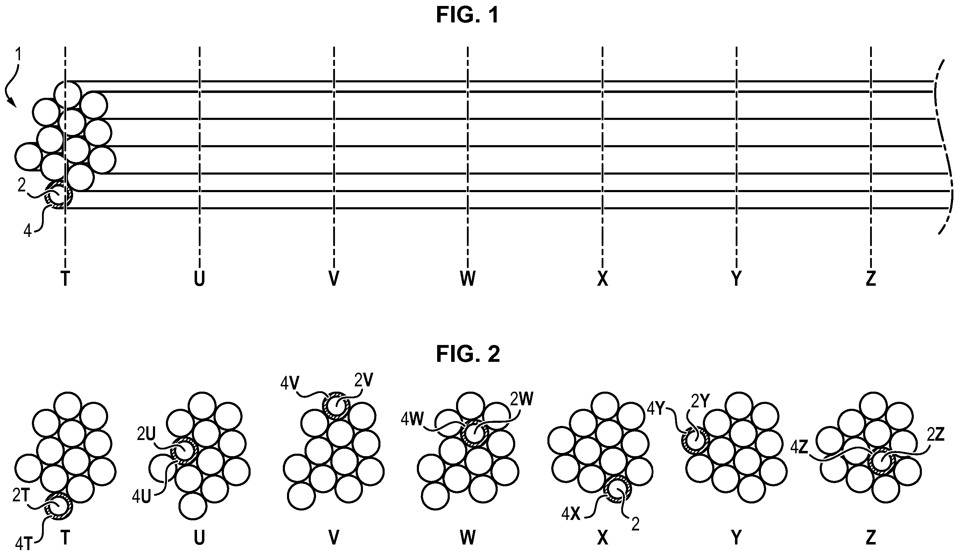

En référence aux figures 1 et 2, un faisceau 1 de fibres optiques comprend N fibres optiques 2 (ou plus simplement « fibres » dans la suite), N étant supérieur ou égal à 3. Dans l'exemple de réalisation représenté sur la figure 1, on a N=12.

Les N fibres optiques 2 s'étendent parallèlement à un axe du faisceau 1.

Les fibres optiques 2 sont agencées pour former ensemble un fagot s'étendant autour de cet axe. Dans ce fagot, chaque fibre optique est adjacente à au moins une autre fibre optique du fagot. Par exemple, la fibre optique 2T est adjacente à deux fibres optiques ; la fibre optique 2W est adjacente à six fibres optiques.

Les fibres optiques 2 du fagot ont des axes respectifs qui ne passent pas tous dans un seul et même plan. Autrement dit, les fibres ne sont pas coplanaires. Le fagot n'est donc pas un ruban.

Le faisceau 1 comprend par ailleurs N points d'adhésifs 4 qui ont pour fonction de lier entre elles les fibres optiques 2, et donc de faire en sorte que le faisceau 1 conserve sa forme de fagot, plus compacte qu'un ruban.

Les points d'adhésifs 4 sont formés à partir de résine ou de colle.

Les N points d'adhésif 4 sont à distance les uns des autres sur les fibres optiques 2. Ils occupent des positions respectives différentes dans une direction parallèle à l'axe du faisceau.

On a représenté en figure 1 les positions respectives T, U, V, W, X, Y, Z de sept points d'adhésif du faisceau 4T, 4U, 4V, 4W, 4X, 4Y, 4Z, parmi les douze points d'adhésifs 4 que comporte le faisceau 1 (N=12).

En outre, deux points d'adhésifs 4 ayant des positions consécutives dans la direction parallèle à l'axe du faisceau 1 (par exemple les points d'adhésif 4T et 4U) sont séparés par une distance dans cette direction qui comprise dans une plage allant de 0,1 millimètres à 20 centimètres.

Chaque point d'adhésif 4 touche un ensemble de fibres optiques 2 du fagot. Par convention, on définit l'ensemble des fibres optiques 2 du fagot qui sont touchées par un point d'adhésif comme l'ensemble de fibres optiques 2 « associé » au point d'adhésif.

Les N ensembles du fagot respectivement touchés par les N points d'adhésifs sont différents les uns des autres.

Un ensemble comprend une pluralité de fibres optique du fagot, notamment deux fibres optiques mutuellement adjacentes de sorte que le point d'adhésif 4 associé à cet ensemble fixe les fibres optiques 2 de l'ensemble les unes par rapport aux autres. Cette règle vaut pour chacun des N ensembles.

Un ensemble associé à l'un des N points d'adhésif 4 comprend deux, trois, quatre, cinq, six ou sept fibres optiques du fagot.

Lorsqu'un ensemble comprend plus de trois fibres optiques 2, les fibres optiques 2 de cet ensemble ne sont pas nécessairement toutes mutuellement adjacentes.

Chaque ensemble comprend une fibre optique « centrale » dans le sens où cette fibre optique centrale est adjacente à chacune des autres fibres optiques de l'ensemble. Les fibres optiques centrales respectives des N ensembles sont toutes différentes.

Chaque fibre optique 2 du faisceau appartient à au moins un des N ensembles.

Le point d'adhésif 4 associé à un ensemble s'étend à 360 degrés autour d'une fibre optique centrale de cet ensemble.

Par exemple, l'ensemble de fibres touché par le point d'adhésif 4T comprend trois fibres optiques : la fibre 2T et les deux fibres adjacentes à la fibre 2T. L'une quelconque de ces trois fibres est adjacente aux deux autres si bien que chacune d'entre elles peut être considérée comme une fibre centrale de l'ensemble. En l'occurrence, le point d'adhésif 4T s'étend à 360 degrés autour de la fibre 2T. Ce point d'adhésif touche également les deux fibres adjacentes à la fibre 2T, si bien que le point d'adhésif 4T permet de fixer mutuellement les trois fibres de l'ensemble associé.

A titre d'autre exemple, l'ensemble touché par le point d'adhésif 4W comprend sept fibres optiques : la fibre 2W et les six fibres qui lui sont adjacentes. La fibre optique 2W constitue une fibre centrale de l'ensemble. Le point d'adhésif s'étend à 360 degrés autour de cette fibre centrale 2W.

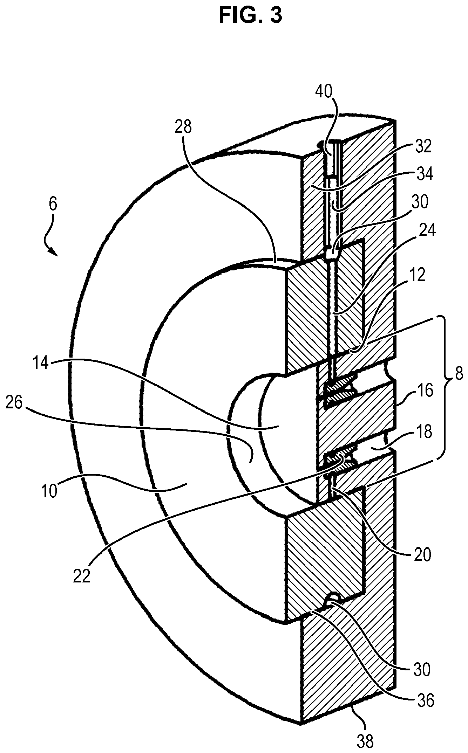

En référence à la figure 3, un dispositif 6 permettant d'obtenir un faisceau 1 de fibres optiques tel que celui représenté sur les figures 1 et 2 comprend un tambour 8 et un élément de distribution 10.

Le tambour 8 présente une surface radialement externe 12 s'étendant autour d'un axe central. La surface radialement externe 12 présente une forme de révolution autour de l'axe central, par exemple une forme de cylindre circulaire droit.

Le tambour 8 présente par ailleurs une surface avant 14, et une surface arrière 16 opposée à la surface avant 14. La surface avant 14 et la surface arrière 16 sont reliées l'une à l'autre par la surface radialement externe 12 et sont perpendiculaires à l'axe central. Lorsque la surface radialement 12 externe est en forme de cylindre droit, les surface avant et arrière sont circulaires.

Le tambour 8 définit N passages traversants 18. Chaque passage 18 débouche d'une part dans la surface avant 14, et d'autre part dans la surface arrière 16.

Les N passages 18 sont à distance les uns des autres. Ils sont par exemple tous parallèles à l'axe central du tambour 8. Les N passages 18 sont par exemples répartis autour de l'axe central de manière régulière, en cercle.

Chaque passage 18 du tambour 8 est destiné à être traversé par une fibre optique 2. Chaque passage 18 présente donc une entrée dans la face arrière 16 par laquelle on peut faire entrer une fibre optique 2 dans le passage 18, et une sortie dans la face avant 14 par laquelle la fibre optique 2 peut ressortir du même passage 18.

Le tambour 8 définit par ailleurs N canaux d'injection 20 de liquide adhésif.

Chaque canal d'injection 20 débouche d'une part à l'extérieur du tambour 8 et débouche d'autre part dans un seul des N passages 18. Par convention, on considère dans la suite que le canal d'injection 20 « associé » à un des passages 18 du tambour 8 est le canal d'injection 20 qui débouche dans ce passage 18.

Les canaux d'injection 20 s'étendent par exemple perpendiculairement à l'axe central de sorte à déboucher dans la surface externe 12. Les canaux d'injection 20 s'étendent par exemple radialement à l'axe central, perpendiculairement aux passages 18.

Le dispositif 6 comprend au moins une buse 22 agencée dans un passage 18. Cette buse 22 est agencée pour permettre une répartition à 360 degrés de liquide adhésif venant du canal d'injection 20 associé à ce passage 18, autour d'une fibre optique 2 qui serait insérée dans ce passage 18. Une telle buse 22 est connue de l'état de la technique.

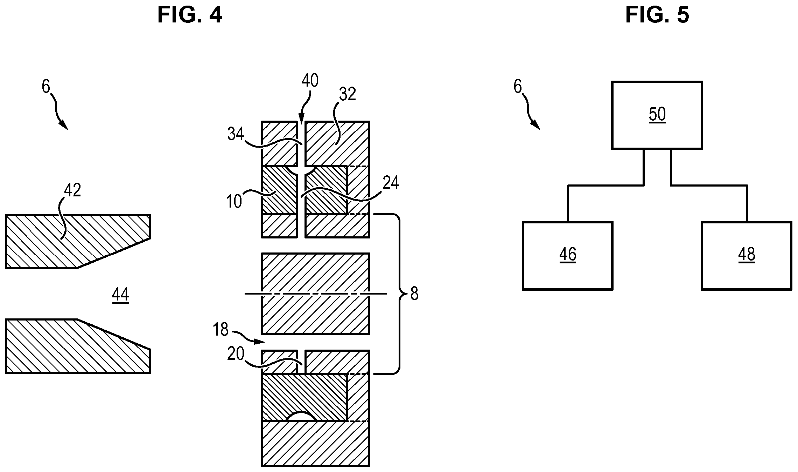

Le dispositif 6 peut comprendre N buses 22 de ce type qui sont agencées respectivement dans les N passages du tambour 8 (les buses 22 ne sont pas représentées sur les figure 4, 6, 7, 8 discutées ci-après pour améliorer leur lisibilité).

L'élément de distribution 10 définit par ailleurs un canal de distribution 24 de liquide adhésif.

L'élément de distribution 10 est mobile par rapport au tambour 8 dans N positions différentes. Dans chacune de ces positions, un seul des canaux d'injection 20 est connecté au canal de distribution 24. Les N canaux d'injection sont agencés pour être connectés les uns après les autres avec le canal de distribution 24 par déplacement de l'élément de distribution 10 par rapport au tambour 8 dans les N positions.

L'élément de distribution 10 est par exemple monté à rotation sur le tambour 8, par exemple autour de celui-ci. Dans ce cas, les N positions qui précèdent sont N positions angulaires différentes de l'élément de distribution 10 par rapport au tambour 8 autour de l'axe central.

L'élément de distribution 10 présente typiquement une forme d'anneau ou de couronne.

L'élément de distribution 10 présente une surface radialement interne 26 et une surface radialement externe 28 opposée à la surface radialement interne 26.

La surface radialement interne 26 est agencée en regard de la surface externe 12 du tambour 8.

La surface radialement interne 26 est de révolution, voire en forme de cylindre droit.

La surface radialement interne 26 présente un rayon sensiblement égal au rayon de la surface externe 12 du tambour 8, de sorte que les surfaces 12, 26 se touchent et puissent glisser l'une contre l'autre.

Le canal de distribution 24 débouche dans la surface radialement interne 26 et dans la surface radialement externe 28. Le canal de distribution 24 s'étend par exemple radialement dans l'élément de distribution 10, perpendiculairement aux passages 18.

Est formée dans la surface radialement externe 28 une gorge 30 s'étendant autour de l'axe central du tambour 8. Le canal de distribution 24 débouche dans la gorge. La gorge 30 est par exemple circulaire.

Le dispositif 6 comprend par ailleurs un élément d'alimentation 32.

L'élément d'alimentation 32 est fixe par rapport au tambour 8. Par exemple, l'élément d'alimentation 32 et le tambour 8 sont deux parties d'une même pièce, cette pièce définissant une cavité pour recevoir l'élément de distribution 10 de telle sorte que l'élément de distribution 10 soit intercalé entre l'élément d'alimentation 32 et le tambour 8 lorsqu'il est reçu dans la cavité. Cette cavité est typiquement annulaire.

L'élément d'alimentation 32 définit un canal d'alimentation 34 en liquide adhésif agencé pour être connecté au canal de distribution 24 en liquide adhésif quelle que soit la position de l'élément de distribution 10 par rapport au tambour 8.

L'élément d'alimentation 32 présente une surface radialement interne 36 et une surface radialement externe 38 opposée à la surface radialement interne 36.

La surface radialement interne 36 est agencée en regard de la surface radialement externe 28 de l'élément de distribution 10. La surface radialement interne 36 présente un rayon sensiblement égal au rayon de la surface radialement externe 28 de l'élément de distribution 10, de sorte que les surfaces 28, 36 se touchent et puissent glisser l'une contre l'autre.

Le canal d'alimentation 34 débouche d'une part dans la surface radialement interne 36 et d'autre part dans la surface radialement externe 38 en un orifice d'entrée 40. Le canal de distribution 24 s'étend par exemple radialement dans l'élément d'alimentation 32.

L'orifice d'entrée 40 est destiné à être raccordée à une source de liquide adhésif (non illustrée).

Le canal d'alimentation 34 est notamment agencé de sorte à pouvoir être connecté à la gorge circulaire 30. Comme la gorge 30 fait tout le tour de l'élément de distribution 10, le canal d'alimentation peut être connecté à la gorge 30 quelle que soit la position de l'élément d'alimentation 32 autour de l'élément de distribution 10.

En référence à la figure 4, le dispositif 6 comprend en outre une filière 42 agencée en aval du tambour 8, de sorte à pouvoir recevoir des fibres optiques 2 ayant traversé les N passages du tambour 8.

La filière 42 définit un conduit 44 de forme adaptée pour susciter un rapprochement mutuel des fibres reçues en provenance des N passages. Ce conduit 44 est par exemple de forme évasée d'aval vers l'amont, de sorte à susciter un rapprochement graduel des fibres entre elles au cours de leur insertion dans la filière 42. Une telle filière 42 est connue de l'état de la technique.

En référence à la **figure 5****,** le dispositif 6 comprend en outre des moyens de déplacement 46 de l'élément de distribution 10 par rapport au tambour 8.

Le dispositif 6 comprend par ailleurs des moyens d'avancement 48 pour faire avancer simultanément N fibres optiques dans les N passages du tambour 8, en direction de la filière 42.

Le dispositif 6 comprend également une unité de commande 50 configurée pour piloter les moyens de déplacement 46 et d'avancement 48.

Un procédé d'obtention du faisceau 1 au moyen du dispositif 6 comprend les étapes suivantes.

On suppose dans un premier temps que les N fibres optiques du faisceau 1 ne sont pas encore liées entre elles.

Les N fibres optiques sont insérées dans les N passages 18 du tambour 8, le cas échéant à l'aide des moyens d'avancement 48, par la surface arrière 16.

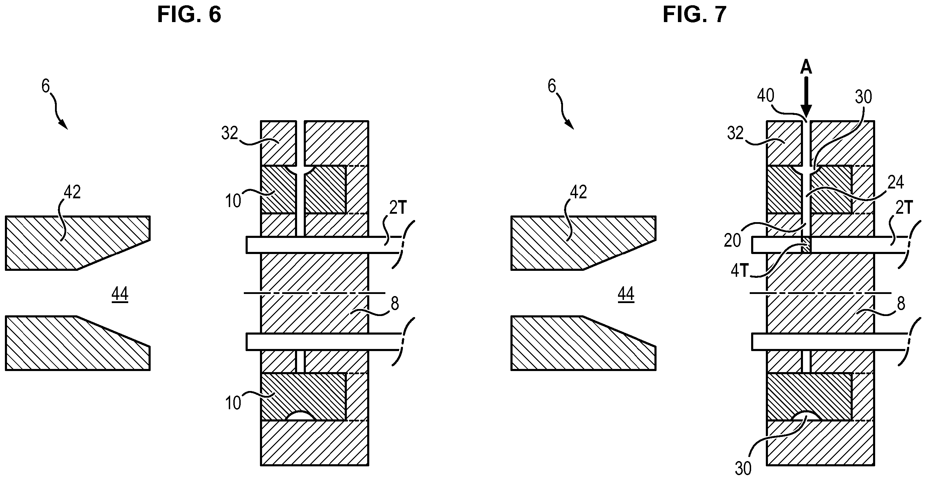

Les N fibres sont avancées de manière à atteindre les canaux d'injection 20 correspondants, comme cela est représenté en **figure 6** (seulement deux de ces fibres 2 sont visibles sur la figure 6).

Un premier point d'adhésif est déposé sur l'une des fibres optiques (par exemple le point d'adhésif 4T sur la fibre 2T) de la manière suivante.

L'unité de commande 50 pilote les moyens de déplacement 46 de sorte à positionner l'élément de distribution 10 dans une première position parmi les N positions discutées précédemment. Dans la première position, le canal de distribution 24 est connecté au canal d'injection 20 débouchant dans le passage dans lequel se trouve la première fibre 2T. Le canal de distribution 24 n'est à ce stade connecté à aucune des N-1 autres canaux d'injection 20.

Du liquide adhésif A (résine ou colle par exemple) est prélevé depuis la source de sorte qu'il pénètre dans l'élément d'alimentation 32 par son orifice d'entrée. Le liquide adhésif A traverse le canal d'alimentation 32, et pénètre dans la gorge 30. Il se peut que dans la position actuelle de l'élément de distribution 10, les canaux d'alimentation et de distribution ne sont pas directement en regard. Néanmoins, le liquide adhésif A atteint tout de même le canal de distribution 24 après avoir circulé dans la gorge circulaire s'étendant autour de l'axe central du tambour 8. Le liquide adhésif pénètre ensuite dans le canal d'injection 20 connecté au canal de distribution 24, et atteint la buse entourant la première fibre 2T. La buse dépose le liquide adhésif A à 360 degrés autour de la fibre 2T, de sorte à former le premier point d'adhésif 4T, conformément à la **figure 7****.** Le premier point d'adhésif ne s'étend que sur un tronçon de la fibre ayant une longueur limitée.

L'unité de commande 50 pilote par ailleurs les moyens d'avancement 48 de sorte à faire avancer les fibres optiques 2 simultanément d'une distance allant de 0,1 millimètres à 20 centimètres.

Une fois cette avancée réalisée, un deuxième point d'adhésif (le point d'adhésif 4U) est déposé sur une deuxième des fibres optiques 2 (la fibre 2U) en répétant les étapes qui précèdent.

L'unité de commande 50 pilote les moyens de déplacement 46 de sorte à positionner l'élément de distribution 10 dans une deuxième position parmi les N positions discutées précédemment. Dans la deuxième position, le canal de distribution 24 est connecté au canal d'injection 20 débouchant dans le passage dans lequel se trouve la deuxième fibre 2V. Le canal de distribution 24 n'est à ce stade connecté à aucune des N-1 autres canaux d'injection 20.

L'étape d'injection de liquide adhésif A décrite précédemment est répétée, si bien que du liquide adhésif A entrant par l'orifice d'entrée 40 est déposé à 360 degrés autour de la fibre 2U, de sorte à former le deuxième point d'adhésif 4U.

Les étapes qui précèdent sont répétées successivement pour les N positions, de sorte à obtenir N points d'adhésifs sur les N fibres optiques 2 traversant les passages 18 du tambour 8.

Au cours de l'application des N points d'adhésifs sur les N fibres 2, l'unité de commande 50 peut piloter les moyens d'avancement 48 des fibres 2 et les moyens de déplacement 46 de l'élément de distribution 10 de différentes manières.

L'unité de commande 50 peut piloter les moyens d'avancement 48 en pas à pas, le pas choisi correspondant à la distance choisie entre deux points d'adhésifs consécutifs le long du faisceau 1. Dans ce cas, un point d'adhésif 4 peut être appliqué sur une des fibres 2 alors que celle-ci est immobile par rapport au tambour 8. Alternativement, l'unité de commande 50 peut piloter les moyens d'avancement 48 de sorte que les fibres optiques 2 soient avancées à vitesse constante et de manière continue, c'est-à-dire sans marquer d'arrêt par rapport au tambour 8. Dans ce cas, l'unité de commande 50 pilote un déplacement de l'élément de distribution 10 par rapport au tambour 8 de manière concomitante à l'avancée des fibres optiques 2 dans les N passages 18 du tambour 8.

En outre, l'unité de commande 50 peut piloter les moyens de déplacement 46 de l'élément de distribution 10 en pas à pas, le pas choisi correspondant à un écart angulaire entre deux canaux d'injection 20 adjacents du tambour 8. Dans ce cas, un point d'adhésif 4 peut être appliqué sur une des fibres 2 alors que l'élément de distribution 10 est immobile par rapport au tambour 8. Alternativement, l'unité de commande 50 peut piloter les moyens de déplacement 46 de sorte que l'élément de distribution 10 soit déplacé à vitesse constante et de manière continue, c'est-à-dire sans marquer d'arrêt par rapport au tambour 8. La quantité de liquide adhésif transmise dans l'un quelconque des canaux d'injection 20 dépend alors de la durée pendant laquelle ce canal d'injection 20 reste connecté au canal de distribution 24.

Les fibres optiques 2 sont avancées par les moyens d'avancement 48 jusqu'à ressortir des N passages 18 par la face avant 14. A ce stade, les N fibres optiques 2 sont à distance les unes des autres car les N passages 18 formés dans le tambour 8 sont à distance les uns des autres.

Les fibres optiques 2 sont avancées de sorte à pénétrer dans le conduit 44 de la filière 42 agencée en aval du tambour 8. La filière 42 rapproche naturellement les fibres 2 les unes des autres de sorte que les fibres 2 se réorganisent en un fagot compact dans lequel les fibres optiques 2 sont non coplanaires, comme représenté en figures 1 et 2. Au cours de ce rapprochement, chaque point d'adhésif 4 initialement déposé sur une fibre optique 2 vient toucher au moins une autre fibre 2 qui lui est adjacente au terme de cette réorganisation. En définitive, la fibre optique 2 centrale de chaque ensemble de fibres touchées par un point d'adhésif donné est la fibre sur laquelle ce point d'adhésif a initialement été déposé, avant son entrée dans la filière 42.

Les fibres optique 2 d'un même ensemble sont définitivement liées entre elles une fois que le liquide adhésif A utilisé pour former les N points d'adhésif 4 a séché.

Lorsque le liquide adhésif A utilisé est thermoplastique, une étape de réticulation par UV est mise en œuvre sur les points d'adhésif afin qu'ils assurent leur fonction de fixation mutuelles de fibres optiques 2 adjacentes dans le fagot formé dans la filière 42.

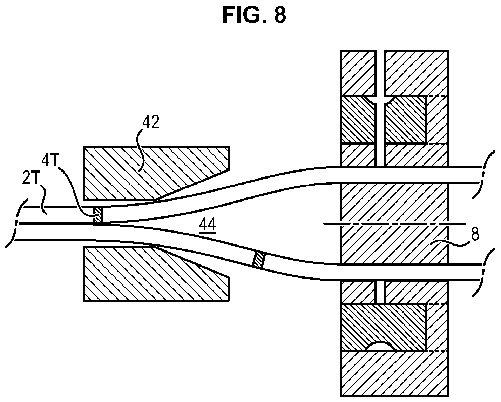

A titre d'exemple, on a représenté en **figure 8** la fibre 2T dont le point d'adhésif 4T vient toucher une autre fibre optique 2 lors de l'insertion de ces fibres dans la filière 42. Bien entendu, cette figure est une vue simplifiée car ne représente que deux fibres optiques 2 ; en réalité, les N fibres pénètrent dans la filière 42 et sont mutuellement rapprochées.

Le faisceau 1 représenté sur les figures 1 et 2 est obtenu en sortie de la filière 42.

Le faisceau 1 de fibres optiques obtenu présente les avantages d'un micromodule souple et cylindrique regroupant un ensemble de fibres optiques, sans utiliser de peaux thermoplastiques ou tubes pour réaliser l'assemblage des fibres optiques. Ce faisceau est par ailleurs aisé à insérer dans une structure de câble optique de section cylindrique par simple guidage dans la cavité centrale d'un tel câble optique.

Le fait qu'un point d'adhésif 4 ait été déposé sur une fibre optique 2 à 360 degrés permet à cette fibre d'être liée par ce point d'adhésif à un plus grand nombre de fibres optiques adjacentes, ce qui renforce la cohésion du faisceau 1 obtenu. Il est néanmoins possible de déposer sur au moins une des fibres 2 du liquide adhésif A ne s'étendant que sur une portion de la circonférence d'une fibre, c'est-à-dire sur un secteur angulaire de moins de 360 degrés.

L'élément d'alimentation 32 par ailleurs a pour avantage de permettre de rendre le dispositif 6 plus pratique d'utilisation. En effet, il pourrait être envisagé de connecter directement le canal de distribution 24 à une source de liquide adhésif, par exemple via un câble flexible. Toutefois, ce câble flexible devrait nécessairement être déplacé au cours du déplacement de l'élément de distribution 10 par rapport au tambour 8. Cet inconvénient est surmonté par l'élément d'alimentation 32 puisque celui reste fixe par rapport au tambour 8 ; un tel câble flexible raccordé à l'orifice d'entrée peut ainsi rester immobile au cours du déplacement de l'élément de distribution 10.

Par ailleurs, il pourrait être envisagé de faire avancer les fibres optiques indépendamment les uns des autres dans les N passage du tambour 8. Toutefois, les faire avancer simultanément est beaucoup plus simple et rapide. De plus, une telle avancée simultanée des fibres 2 permet de mieux contrôler l'écart entre chaque paire de points d'adhésifs 4 le long du faisceau 1, donc de mieux répartir ces points d'adhésifs le long du faisceau 1.

La gorge 30 peut en outre faire l'objet de variantes. Dans un mode de réalisation non illustré, la gorge est formée dans la surface radialement interne de l'élément d'alimentation 32 et non dans la surface radialement externe de l'élément de distribution 10. Dans encore un autre mode de réalisation, la gorge est formée partiellement dans la surface radialement externe de l'élément de distribution 10, et partiellement dans la surface radialement interne de l'élément d'alimentation 32.

Les N points d'adhésif 4 appliquées peuvent en outre être colorés dans des couleurs différentes, à des fins d'identification d'une fibre optique 2 dans le faisceau 1.

## Revendications

1. Faisceau (1) de fibres optiques comprenant :
• un nombre N de fibres optiques (2) agencées de manière non coplanaire pour former ensemble un fagot s'étendant le long d'un axe, dans lequel N ≥ 3,
• le même nombre N de points d'adhésif (4) appliqués à distance les uns des autres sur les fibres optiques (2) en des positions respectives (U-Z) différentes dans une direction parallèle à l'axe, dans lequel chaque point d'adhésif (4) touche un ensemble de fibres optiques (2) du fagot comprenant deux fibres optiques mutuellement adjacentes de sorte que le point d'adhésif fixe les fibres optiques de l'ensemble les unes par rapport aux autres, dans lequel les N ensembles respectivement touchés par les N points d'adhésifs (4) sont différents les uns des autres, et dans lequel chaque fibre optique est touchée par au moins un des N points d'adhésifs.

2. Faisceau de fibre optiques selon la revendication précédente, dans lequel au moins un des points d'adhésif (4) s'étend à 360 degrés autour d'une des fibres optiques (2) du fagot.

3. Faisceau de fibre optiques selon l'une des revendications précédentes, dans lequel au moins un des ensembles comprend trois à sept fibres optiques (2) du fagot.

4. Faisceau de fibres optiques selon l'une des revendications précédentes, dans lequel deux points d'adhésifs (4) ayant des positions consécutives dans la direction parallèle à l'axe sont séparés par une distance mesurée suivante cette direction qui est comprise dans une plage allant de 0,1 millimètres à 20 centimètres.

5. Procédé d'application d'adhésif sur un faisceau de fibres optiques comprenant un nombre N de fibres optiques (2) agencées de manière non coplanaire pour former ensemble un fagot s'étendant le long d'un de l'axe, dans lequel N ≥3, le procédé comprenant l'application du même nombre N de points d'adhésif (4) à distance les uns des autres sur les fibres optiques (2) en des positions respectives (U-Z) différentes dans une direction parallèle à l'axe, dans lequel chaque point d'adhésif (4) touche un ensemble de fibres optiques du fagot comprenant deux fibres optiques mutuellement adjacentes de sorte que le point d'adhésif (4) fixe les fibres optiques de l'ensemble les unes par rapport aux autres, dans lequel les N ensembles respectivement touchés par les N points d'adhésifs (4) sont différents les uns des autres, et dans lequel chaque fibre optique est touchée par au moins un des N points d'adhésifs.

6. Procédé selon la revendication 5, dans lequel l'application d'un point d'adhésif (4T) comprend des étapes de
• dépôt du point d'adhésif (4T) sur une première fibre optique (2T) propre du fagot alors que la première fibre optique (2T) est à distance des autres fibres optiques (2) du fagot,
• rapprochement mutuel de la première fibre optique (2T) et d'au moins une deuxième fibre optique du fagot jusqu'à ce que le point d'adhésif (4T) touche la deuxième fibre optique.

7. Procédé selon la revendication précédente, dans lequel le point d'adhésif (4T) est déposé de sorte à s'étendre à 360 degrés autour de la première fibre optique (2T).

8. Procédé selon l'une des revendications 5 à 7, comprenant des étapes de :
• insertion des N fibres optiques dans le même nombre N de passages (18) respectifs d'un tambour (8), le tambour (8) définissant par ailleurs le même nombre N de canaux d'injection (20) de liquide adhésif débouchant à l'extérieur du tambour (8) et débouchant respectivement dans les N passages (18),
• positionnement d'un élément de distribution (10) de liquide adhésif définissant un canal de distribution (24) dans N positions différentes dans chacune desquelles un seul des canaux d'injection (20) est connecté au canal de distribution (24), les N canaux d'injection étant connectés l'une après l'autre avec le canal de distribution (24) par déplacement de l'élément de distribution (10) par rapport au tambour (8),
• envoi d'un liquide adhésif (A) dans le canal de distribution (24), de sorte que le liquide adhésif (A) traverse successivement les canaux d'injection (20) et se dépose successivement sur les N fibres optiques (2) insérées dans les N passages (18) de manière à former les N points d'adhésifs (4).

9. Procédé selon la revendication précédente, dans lequel les N fibres optiques (2) sont avancées simultanément dans les N passages (18), par exemple pendant que l'élément de distribution (10) est déplacé par rapport au tambour (8).

10. Dispositif (6) d'obtention d'un faisceau (1) de fibres optiques, le dispositif (6) comprenant :
• un tambour (8) définissant un nombre N de passages (18) destinés à être traversés respectivement par le même nombre N de fibres optiques (2), et définissant par ailleurs le même nombre N de canaux d'injection (20) de liquide adhésif débouchant à l'extérieur du tambour (8) et débouchant respectivement dans les N passages (18), dans lequel N ≥3,
• un élément de distribution (10) définissant un canal de distribution (24) de liquide adhésif, l'élément de distribution (10) étant mobile par rapport au tambour (8) dans N positions différentes dans chacune desquelles un seul des canaux d'injection (20) est connecté au canal de distribution (24), les N canaux d'injection étant agencés pour être connectés les uns après les autres avec le canal de distribution (24) par déplacement de l'élément de distribution (10) par rapport au tambour (8) dans les N positions, de sorte que le même nombre N de points d'adhésifs (4) à distance les uns des autres puissent être successivement appliqués sur les N fibres optiques (2) insérées dans les passages (18) par envoi de liquide adhésif (A) dans le canal de distribution (24)) puis dans les canaux d'injection (20) les uns après les autres,
• une filière (42) agencée en aval du tambour (8) pour rapprocher les N fibres optiques les unes vers les autres après leur traversée des N passages (18), de sorte que les N fibres optiques (2) soient non coplanaires et forment ensemble un fagot s'étendant le long d'un axe dans lequel les N points d'adhésifs (4) ont des positions respectives différentes dans une direction parallèle à l'axe, et dans lequel chaque point d'adhésif (4) touche un ensemble de fibres optiques du fagot comprenant deux fibres optiques (2) mutuellement adjacentes de sorte que le point d'adhésif (4) fixe les fibres optiques de l'ensemble les unes par rapport aux autres, dans lequel les N ensembles du fagot respectivement touchés par les N points d'adhésifs (4) sont différents les uns des autres, et dans lequel chaque fibre optique est touchée par au moins un des N points d'adhésifs.

11. Dispositif selon la revendication 10, dans lequel l'élément de distribution (10) est monté à rotation sur le tambour (8).

12. Dispositif selon l'une des revendications 10 à 11, comprenant au moins une buse d'injection (22) agencée dans un des N passages (18) du tambour (8), la buse d'injection (22) étant adaptée pour déposer un liquide adhésif (A) provenant d'un des canaux d'injection (20) à 360 degrés autour d'une fibre optique (2) insérée dans le passage (18) où la buse d'injection (22) est agencée.

13. Dispositif selon l'une des revendications 10 à 12, comprenant des moyens d'avancement (48) pour faire avancer simultanément les fibres optiques du faisceau dans les passages (18) du tambour (8).

14. Dispositif selon la revendication précédente, comprenant des moyens de déplacement (46) de l'élément de distribution (10) par rapport au tambour (8), et une unité de commande (50) configurée pour piloter les moyens de déplacement (46) et d'avancement (48) de sorte que l'élément de distribution soit positionné les N positions l'une après l'autre pendant que les fibres optiques du faisceau sont avancées dans les passages (18) du tambour (8).

15. Dispositif selon l'une des revendications 10 à 14, comprenant par ailleurs un élément d'alimentation (32) fixe par rapport au tambour (8), l'élément d'alimentation (32) définissant un canal d'alimentation (34) en liquide adhésif agencé pour être connecté au canal de distribution (24) en liquide adhésif quelle que soit la position de l'élément de distribution (10) par rapport au tambour (8).

16. Dispositif selon la revendication précédente, dans lequel l'un (10) des éléments de distribution et d'alimentation présente une surface (28) définissant une gorge (30) s'étendant autour de l'axe du tambour (8), et dans lequel le canal (34) de l'autre élément (32) parmi les éléments de distribution et d'alimentation débouche dans la gorge (30).

## Patentansprüche

1. Bündel (1) aus optischen Fasern, umfassend:
• eine Anzahl N optischer Fasern (2), die nicht koplanar angeordnet sind, um gemeinsam einen Strang zu bilden, der sich entlang einer Achse erstreckt, wobei N ≥ 3,
• dieselbe Anzahl N von Kleberpunkten (4), die voneinander beabstandet auf den optischen Fasern (2) an jeweiligen unterschiedlichen Positionen (U-Z) in einer Richtung parallel zu der Achse aufgetragen sind, wobei jeder Kleberpunkt (4) eine Anordnung aus optischen Fasern (2) des Strangs berührt, der zwei gegenseitig benachbarte optische Fasern umfasst, so dass der Kleberpunkt die optischen Fasern der Anordnung im Verhältnis zueinander befestigt, wobei die N Anordnungen, die jeweils von den N Kleberpunkten (4) berührt werden, voneinander unterschiedlich sind, und wobei jede optische Faser von mindestens einem der N Kleberpunkte berührt wird.

2. Bündel aus optischen Fasern nach vorangehendem Anspruch, wobei sich mindestens einer der Kleberpunkte (4) in 360 Grad um eine der optischen Fasern (2) des Strangs erstreckt.

3. Bündel aus optischen Fasern nach einem der vorangehenden Ansprüche, wobei mindestens eine der Anordnungen drei bis sieben optische Fasern (2) des Strangs umfasst.

4. Bündel aus optischen Fasern nach einem der vorangehenden Ansprüche, wobei zwei Kleberpunkte (4), die aufeinanderfolgende Positionen in der zu der Achse parallelen Richtung haben, durch einen Abstand getrennt sind, der, gemessen in dieser Richtung, in einem Bereich von 0,1 Millimeter bis 20 Zentimeter liegt.

5. Verfahren zum Auftragen von Kleber auf ein Bündel aus optischen Fasern, umfassend eine Anzahl N optischer Fasern (2), die nicht koplanar angeordnet sind, um gemeinsam einen Strang zu bilden, der sich entlang einer Achse erstreckt, wobei N ≥ 3, wobei das Verfahren das Auftragen derselben Anzahl N von Kleberpunkten (4) voneinander beabstandet auf die optischen Fasern (2) an jeweiligen unterschiedlichen Positionen (U-Z) in einer Richtung parallel zu der Achse umfasst, wobei jeder Kleberpunkt (4) eine Anordnung aus optischen Fasern des Strangs berührt, der zwei gegenseitig benachbarte optische Fasern umfasst, so dass der Kleberpunkt (4) die optischen Fasern der Anordnung im Verhältnis zueinander befestigt, wobei die N Anordnungen, die jeweils von den N Kleberpunkten (4) berührt werden, voneinander unterschiedlich sind, und wobei jede optische Faser von mindestens einem der N Kleberpunkte berührt wird.

6. Verfahren nach Anspruch 5, wobei das Auftragen eines Kleberpunkts (4T) folgende Schritte umfasst
• Aufbringen des Kleberpunkts (4T) auf eine erste optische Faser (2T), die zu dem Strang gehört, wohingegen die erste optische Faser (2T) von den anderen optischen Fasern (2) des Strangs beabstandet ist,
• gegenseitiges Annähern der ersten optischen Faser (2T) und mindestens einer zweiten optischen Faser des Strangs, bis der Kleberpunkt (4T) die zweite optische Faser berührt.

7. Verfahren nach vorangehendem Anspruch, wobei der Kleberpunkt (4T) derart aufgetragen wird, dass er sich in 360 Grad um die erste optische Faser (2T) erstreckt.

8. Verfahren nach einem der Ansprüche 5 bis 7, umfassend folgende Schritte:
• Einsetzen der N optischen Fasern in dieselbe Anzahl N jeweiliger Durchgänge (18) einer Trommel (8), wobei die Trommel (8) ferner dieselbe Anzahl N Kleberflüssigkeits-Einspritzkanäle (20) definiert, die außerhalb der Trommel (8) ausmünden und jeweils in die N Durchgänge (18) einmünden,
• Positionieren eines Kleberflüssigkeits-Verteilelements (10), das einen Verteilkanal (24) an N unterschiedlichen Positionen definiert, wobei in jeder von diesen ein einziger der Einspritzkanäle (20) an den Verteilkanal (24) angeschlossen ist, wobei die N Einspritzkanäle nacheinander an den Verteilkanal (24) durch Verlagerung des Verteilelements (10) in Bezug auf die Trommel (8) angeschlossen werden,
• Entsenden einer Kleberflüssigkeit (A) in den Verteilkanal (24), so dass die Kleberflüssigkeit (A) die Einspritzkanäle (20) nacheinander durchquert und sich nacheinander auf den N optischen Fasern (2) derart ablagert, die in die N Durchgänge (18) eingesetzt sind, dass die N Kleberpunkte (4) gebildet werden.

9. Verfahren nach vorangehendem Anspruch, wobei die N optischen Fasern (2) in den N Durchgängen (18) gleichzeitig vorwärtsbewegt werden, beispielsweise währenddessen das Verteilelement (10) in Bezug auf die Trommel (8) verlagert wird.

10. Vorrichtung (6) zum Erhalten eines Bündels (1) optischer Fasern, wobei die Vorrichtung (6) umfasst:
• eine Trommel (8), die eine Anzahl N von Durchgängen (18) definiert, die bestimmt sind, von jeweils derselben Anzahl N optischer Fasern (2) durchquert zu werden, und ferner dieselbe Anzahl N Kleberflüssigkeits-Einspritzkanäle (20) definiert, die außerhalb der Trommel (8) ausmünden und jeweils in die N Durchgänge (18) einmünden, wobei N ≥3,
• ein Verteilelement (10), das einen Kleberflüssigkeits-Verteilkanal (24) definiert, wobei das Verteilelement (10) in Bezug auf die Trommel (8) in N unterschiedliche Positionen beweglich ist, wobei in jeder von diesen ein einziger der Einspritzkanäle (20) an den Verteilkanal (24) angeschlossen ist, wobei die N Einspritzkanäle angeordnet sind, um nacheinander an den Verteilkanal (24) durch Verlagerung des Verteilelements (10) in Bezug auf die Trommel (8) in die N Positionen angeschlossen zu werden, so dass dieselbe Anzahl von N Kleberpunkten (4), die voneinander beabstandet sind, nacheinander auf die N optischen Fasern (2) aufgebracht werden können, die in die Durchgänge (18) eingesetzt sind, durch Entsenden von Kleberflüssigkeit (A) in den Verteilkanal (24), dann nacheinander in die Einspritzkanäle (20),
• eine Düse (42), die der Trommel (8) nachgelagert ist, um die N optischen Fasern aneinander anzunähern, nachdem sie die N Durchgänge (18) durchquert haben, so dass die N optischen Fasern (2) nicht koplanar sind und gemeinsam einen Strang bilden, der sich entlang einer Achse erstreckt, wobei die N Kleberpunkte (4) jeweilige unterschiedliche Positionen in einer Richtung parallel zu der Achse haben, und wobei jeder Kleberpunkt (4) eine Anordnung aus optischen Fasern des Strangs berührt, der zwei gegenseitig benachbarte optische Fasern (2) umfasst, so dass der Kleberpunkt (4) die optischen Fasern der Anordnung im Verhältnis zueinander befestigt, wobei die N Anordnungen des Strangs, die jeweils von den N Kleberpunkten (4) berührt werden, voneinander unterschiedlich sind, und wobei jede optische Faser von mindestens einem der N Kleberpunkte berührt wird.

11. Vorrichtung nach Anspruch 10, wobei das Verteilelement (10) auf der Trommel (8) rotatorisch angebracht ist.

12. Vorrichtung nach einem der Ansprüche 10 bis 11, umfassend mindestens eine Einspritzdüse (22), die in einem der N Durchgänge (18) der Trommel (8) angeordnet ist, wobei die Einspritzdüse (22) geeignet ist, eine Kleberflüssigkeit (A) aus einem der Einspritzkanäle (20) in 360 Grad um eine optische Faser (2) aufzubringen, die in den Durchgang (18) eingesetzt ist, wo die Einspritzdüse (22) angeordnet ist.

13. Vorrichtung nach einem der Ansprüche 10 bis 12, umfassend Vorschubmittel (48), um die optischen Fasern des Bündels in den Durchgängen (18) der Trommel (8) gemeinsam vorzuschieben.

14. Vorrichtung nach vorangehendem Anspruch, umfassend Verlagerungsmittel (46) des Verteilelements (10) in Bezug auf die Trommel (8) und eine Steuereinheit (50), die ausgelegt ist, um die Verlagerungs- (46) und Vorschubmittel (48) derart zu steuern, dass das Verteilelement nacheinander an den N Positionen positioniert ist, währenddessen die optischen Fasern des Bündels in die Durchgänge (18) der Trommel (8) vorgeschoben werden.

15. Vorrichtung nach einem der Ansprüche 10 bis 14, umfassend ferner ein in Bezug auf die Trommel (8) festes Versorgungselement (32), wobei das Versorgungselement (32) einen Kleberflüssigkeits-Versorgungskanal (34) definiert, der ausgebildet ist, um an den Kleberflüssigkeits-Verteilkanal (24) angeschlossen zu sein, unabhängig von der Position des Verteilelements (10) in Bezug auf die Trommel (8).

16. Vorrichtung nach vorangehendem Anspruch, wobei eins (10) von dem Verteiler- und Versorgungselement eine Oberfläche (28) aufweist, die eine Nut (30) definiert, die sich um die Achse der Trommel (8) erstreckt, und wobei der Kanal (34) des anderen Elements (32) von dem Verteiler- und Versorgungselement in der Nut (30) ausmündet.

## Claims

1. A bundle of optical fibres (1) comprising:
- a number N of optical fibres (2) arranged in a non-coplanar manner to form together a faggot extending along an axis, wherein N ≥3,
- the same number N of points of adhesive (4) applied at a distance from each other on the optical fibres (2) in respective different positions (U-Z) in a direction parallel to the axis, wherein each point of adhesive (4) touches a set of optical fibres (2) of the faggot comprising two mutually adjacent optical fibres such that the point of adhesive fixes the optical fibres of the set with respect to each other, wherein the N sets respectively touched by the N points of adhesive (4) are different from each other, and wherein each optical fibre is touched by at least one of the N points of adhesive.

2. The bundle of optical fibres according to the preceding claim, wherein at least one of the points of adhesive (4) extends 360 degrees around one of the optical fibres (2) of the faggot.

3. The bundle of optical fibres according to one of the preceding claims, wherein at least one of the sets comprises three to seven optical fibres (2) of the faggot.

4. The bundle of optical fibres according to one of the preceding claims, wherein two points of adhesive (4) having consecutive positions in the direction parallel to the axis are separated by a distance measured in this direction which is comprised within a range from 0.1 millimetres to 20 centimetres.

5. A method for applying adhesive to a bundle of optical fibres comprising a number N of optical fibres (2) arranged in a non-coplanar manner to form together a faggot extending along an axis, wherein N ≥ 3, the method comprising applying the same number N of points of adhesive (4) at a distance from each other on the optical fibres (2) in respective different positions (U-Z) in a direction parallel to the axis, wherein each point of adhesive (4) touches a set of optical fibres of the faggot comprising two mutually adjacent optical fibres such that the point of adhesive (4) fixes the optical fibres of the set with respect to each other, wherein the N sets respectively touched by the N points of adhesive (4) are different from each other, and wherein each optical fibre is touched by at least one of the N points of adhesive.

6. The method according to claim 5, wherein the application of a point of adhesive (4T) comprises steps of
- depositing the point of adhesive (4T) on a first optical fibre (2T) specific to the faggot while the first optical fibre (2T) is at a distance from the other optical fibres (2) of the faggot,
- mutually approximating the first optical fibre (2T) and at least one second optical fibre of the faggot until the point of adhesive (4T) touches the second optical fibre.

7. The method according to the preceding claim, wherein the point of adhesive (4T) is deposited so as to extend 360 degrees around the first optical fibre (2T).

8. The method according to one of claims 5 to 7, comprising the steps of:
- inserting the N optical fibres in the same number N of respective passages (18) of a drum (8), the drum (8) moreover defining the same number N of adhesive liquid injection channels (20) opening to the outside of the drum (8) and opening respectively into the N passages (18) ,
- positioning an adhesive liquid distribution element (10) defining a distribution channel (24) in N different positions in each of which only one of the injection channels (20) is connected to the distribution channel (24), the N injection channels being connected one after the other with the distribution channel (24) by displacing the distribution element (10) with respect to the drum (8),
- sending an adhesive liquid (A) into the distribution channel (24), such that the adhesive liquid (A) successively traverses the injection channels (20) and is deposited successively on the N optical fibres (2) inserted into the N passages (18) so as to form the N points of adhesive (4).

9. The method according to the preceding claim, wherein the N optical fibres (2) are advanced simultaneously through the N passages (18), for example while the distribution element (10) is displaced with respect to the drum (8).

10. A device (6) for obtaining a bundle (1) of optical fibres, the device (6) comprising:
- a drum (8) defining a number N of passages (18) intended to be traversed respectively by the same number N of optical fibres (2), and moreover defining the same number N of liquid adhesive injection channels (20) opening to the outside of the drum (8) and opening respectively into the N passages (18), wherein N ≥ 3,
- a distribution element (10) defining an adhesive liquid distribution channel (24), the distribution element (10) being movable with respect to the drum (8) in N different positions in each of which only one of the injection channels (20) is connected to the distribution channel (24), the N injection channels being arranged to be connected one after the other with the distribution channel (24) by displacing the distribution element (10) with respect to the drum (8) in the N positions, such that the same number N of points of adhesive (4) at a distance from each other can be successively applied on the N optical fibres (2) inserted into the passages (18) by sending adhesive liquid (A) into the distribution channel (24) then into the injection channels (20) one after the other,
- a die (42) arranged downstream of the drum (8) to bring the N optical fibres closer to each other after they have traversed the N passages (18), such that the N optical fibres (2) are not coplanar and form together a faggot extending along an axis wherein the N points of adhesive (4) have respective different positions in a direction parallel to the axis, and wherein each point of adhesive (4) touches a set of optical fibres of the faggot comprising two mutually adjacent optical fibres (2) such that the point of adhesive (4) fixes the optical fibres of the set with respect to each other, wherein the N sets of the faggot respectively touched by the N points of adhesive (4) are different from each other, and wherein each optical fibre is touched by at least one of the N points of adhesive.

11. The device according to claim 10, wherein the distribution element (10) is rotatably mounted on the drum (8).

12. The device according to one of claims 10 to 11, comprising at least one injection nozzle (22) arranged in one of the N passages (18) of the drum (8), the injection nozzle (22) being adapted to deposit an adhesive liquid (A) from one of the injection channels (20) 360 degrees around an optical fibre (2) inserted into the passage (18) where the injection nozzle (22) is arranged.

13. The device according to one of claims 10 to 12, comprising advancement means (48) for simultaneously advancing the optical fibres of the bundle through the passages (18) of the drum (8).

14. The device according to the preceding claim, comprising means (46) for displacing the distribution element (10) with respect to the drum (8), and a control unit (50) configured to control the displacement (46) and advancing (48) means such that the distribution element is positioned in the N positions one after the other while the optical fibres of the bundle are advanced through the passages (18) of the drum (8).

15. The device according to one of claims 10 to 14, further comprising a supply element (32) fixed with respect to the drum (8), the supply element (32) defining an adhesive liquid supply channel (34) arranged to be connected to the adhesive liquid distribution channel (24) regardless of the position of the distribution element (10) with respect to the drum (8).

16. The device according to the preceding claim, wherein one (10) of the distribution and supply elements has a surface (28) defining a groove (30) extending around the axis of the drum (8), and wherein the channel (34) of the other element (32) among the distribution and supply elements opens into the groove (30).
